# EUROPÄISCHE PATENTANMELDUNG

(11) **EP 1 002 923 A2**
(43) Veröffentlichungstag der Anmeldung: **24.05.2000**
(21) Anmeldenummer: 99250405.0
(22) Anmeldetag: 17.11.1999
(51) Int. Cl.: E05F 15/14, B60J 5/06

(54) **Vorrichtung zum Öffnen und Verschliessen einer Öffnung in einer Wandung mittels einer Schiebetür**

(30) Priorität: 18.11.1998 DE 19853989; 06.08.1999 DE 19938378
(71) Anmelder: Apprich Secur 2000 GmbH, 14962 Ludwigsfelde (DE)
(72) Erfinder: Apprich, Harry, 14974 Ludwigsfelde (DE)
(74) Vertreter: Pfenning, Meinig & Partner GbR

(57) **Zusammenfassung**

Es wird eine Vorrichtung zum Öffnen und Verschließen einer Öffnung in einer Wandung mittels einer Schiebetür, insbesondere für Fahrzeuge, vorgeschlagen. Die Schiebetür ist durch eine Führungsvorrichtung im wesentlichen parallel zur Wandung verschiebbar und durch einen Linearantrieb, welcher ein linear ausgebildetes Element und ein damit in Eingriff stehendes antreibendes Element aufweist, antreibbar angeordnet. Das linear ausgebildete Element des Linearantriebs und eine zu der Führungsvorrichtung gehörende Laufschiene einerseits sind an der Wandung und das antreibende Element des Linearantriebs sowie ein zu der Führungsvorrichtung gehörender, mit der Laufschiene in Eingriff stehender Läufer andererseits sind an der Schiebetür befestigt. Der Läufer ist über ein Gelenk an der Schiebetür befestigt.

## Beschreibung

Die vorliegende Erfindung betrifft eine Vorrichtung zum Öffnen und Verschließen einer Öffnung in einer Wandung mittels einer Schiebetür nach dem Oberbegriff des Hauptanspruches.

Die WO97/44559 A1 offenbart eine Vorrichtung zum Öffnen und Verschließen einer Schiebetür, insbesondere für Fahrzeuge. Die Schiebetür ist im wesentlichen parallel zur Wandung verschiebbar. Die Vorrichtung ist mit einer Fahreinheit versehen, die die Verschiebebewegung der Schiebetür vornimmt und die einen mit einem Elektromotor versehenen Linearantrieb aus einer Zahnstange und einem Zahnrad sowie eine Führungsvorrichtung aufweist. Dabei ist die Zahnstange des Linearantriebs und ein Element der Führungsvorrichtung einerseits an der Tür und das Zahnrad des Linearantriebs und das ander Element der Führungsvorrichtung andererseits an einer Halterung befestigt, die über eine mit der Wandung in Verbindung stehende Abstützanordnung abgestützt ist. Die Abstützanordnung überführt eine Bewegung der Halterung im wesentlichen senkrecht zur Wandung in eine Schwenkbewegung. Weiterhin ist eine von einem vorzugsweise weiteren Elektromotor angetriebenen Verriegelungseinheit vorgesehen, die die Schiebetür in ihre die Öffnung verschließenden Stellung unter Ausführung einer Bewegung senkrecht zur Wandung ver- und entriegelt. Eine Steuereinrichtung, die Positionsschalter aufweist, steuert die Fahr- und Verriegelungseinheit.

Diese Schiebetür nach dem Stand der Technik hat sich besonders für Sicherheitstransportfahrzeuge sehr bewährt, da hiermit Schiebetüren mit einer hohen Masse zuverlässig und schnell bewegt werden können. Allerdings ist die Konstruktion relativ aufwendig und für die Fertigung von Alltagsfahrzeugen in der Großserie erscheint eine wirtschaftliche Anwendung nicht möglich.

Ausgehend von diesem Stand der Technik liegt der vorliegenden Erfindung die Aufgabe zugrunde, eine in der Fertigung von Alltagsfahrzeugen in der Großserie anwendbare Vorrichtung zum Öffnen und Verschließen einer Öffnung in einer Wandung mittels einer Schiebetür zu schaffen, welche unter Einsatz möglichst weniger Bauteile eine zuverlässige elektrische Öffnung von Schiebetüren ermöglicht. Außerdem sollen bereits vorhandene Alltagsfahrzeuge, welche von Hand zu öffnende Schiebetüren aufweisen, mit minimalen Umbauarbeiten mit elektrischen Schiebetüren versehen werden können.

Diese Aufgabe wird durch eine Vorrichtung mit den Merkmalen des Oberbegriffs des Patentanspruches 1 in Verbindung mit den kennzeichnenden Merkmalen des Patentanspruches 1 gelöst.

Dadurch, daß das linear ausgebildete Element des Linearantriebs und eine zu der Führungsvorrichtung gehörende Laufschiene einerseits an der Wandung und das antreibende Element des Linearantriebs sowie ein zu der Führungsvorrichtung gehörender, mit der Laufschiene in Eingriff stehender Läufer andererseits an der Schiebetür befestigt sind, wobei der Läufer über ein Gelenk an der Schiebetür befestigt ist, weist ein Fahrzeug mit einer erfindungsgemäßen Vorrichtung zum Öffnen und Verschließen einer Öffnung in einer Wandung mittels einer Schiebetür lediglich minimale Modifikationen gegenüber bestehenden Alltagsfahrzeugen mit von Hand zu öffnenden Schiebetüren auf. Als zu der Führungsvorrichtung gehörende Laufschiene kann bei praktisch allen Großserienfahrzeugen die bereits vorhandene Laufschiene genutzt werden. Ebenso kann in der Regel der mit der Laufschiene in Eingriff stehende Läufer weiter verwendet werden. Das linear ausgebildete Element des Linearantriebs kann in sehr einfacher Weise an die bestehende Laufschiene angebracht werden, ohne daß Karosseriearbeiten erforderlich sind. Der zum Antrieb der Schiebetür notwendige Motor kann auf einfache Weise auf der zum Fahrzeiginnenraum orientierten Seite der Schiebetür fest angebracht werden. Weitere Umbauarbeiten, wie etwa der Ersatz bestehender Schlösser etc. sind nicht notwendig, so daß hier ausßerdem Zusatzkosten, welche bei Nachrüstarbeiten durch behördliche Abnahme erfolgen müßten, entfallen.

Vorteilhafte Weiterbildungen der vorliegenden Erfindung werden in den abhängigen Patentansprüchen angegeben.

Eine besonders vorteilhafte Ausführungsform sieht vor, daß die Laufschiene bzw. das linear ausgebildete Element des Linearantriebs an einem Ende an die Öffnung heranreichen und an diesem Ende in Eintrittsrichtung zur Öffnung gekrümmt sind. Hiermit wird auf die denkbar einfachste Weise das Bewegen der Schiebetür senkrecht zur Öffnung ermöglicht. Besonders bei modernen Schiebetüren-Fahrzeugen, welche bereits eine Laufschiene aufweisen, welche an einem Ende an die Öffnung heranreicht und in Eintrittsrichtung zur Öffnung gekrümmt ist, kann z.B. eine entsprechend geformte Zahnstange leicht an der Laufschiene angebracht werden, ohne daß Karosseriearbeiten erforderlich sind. Vorteilhafterweise ist die Laufschine verbunden mit dem linearen Element, im Mittelbereich der Wandung hinter der Türöffnung angebracht.

Eine weitere vorteilhafte Ausführungsform der Erfindung sieht vor, daß der Elektromotor über ein Zahnradgetriebe mit einem als Zahnstange ausgeführtem linear ausgebildeten Element verbunden ist. Die Mehrstufigkeit des Zahnradgetriebes erlaubt hierbei, je nach Erfordernis, durch Änderung der Getriebeübersetzung eine einfache Anpassung der Fahrgeschwindigkeit der Schiebetür bzw. der an der Schiebetür zur Verschiebung angreifenden Kraft.

Eine besonders vorteilhafte Ausführungsform sieht vor, daß die Laufschiene aus Stahlblech besteht und das Zahnstangenprofil in die Laufschiene eingepreßt ist. Hiermit ist die Fertigung des linear ausgebildeten Elementes des Linearantriebs mit minimalen Kosten ermöglicht, außerdem wird ein optimales Zusammenspiel mit der Laufschiene gewährleistet, da die Zahnstange integraler Bestadnteil der Laufschiene wird.

Schließlich sieht eine weitere vorteilhafte Ausführungsform vor, daß Abdeckvorrichtungen zur Minimierung des Eindringens von Verschmutzungen in den empfindlichen Bereich der Zahnstange bzw. des Zahnradgetriebes installiert werden. Zum Schutz des Inneren einer Laufschiene, welche im Inneren z.B. mit einer Zahnstange versehen sein kann, können nach Maßgabe der Läuferbewegung mitlaufende Lamellen, wie sie z.B. bei Bedienhebeln des Automatikgetriebes bei Kraftfahrzeugen bekannt sind, verwendet werden. Zuf Verschmutzungsminimierung im Bereich des Zahnradgetriebes können elastische Kapseldichtungen vorgesehen werden, welche das gesamte Zahnradgetriebe des Linearantriebs (wenn gewünscht unter Einschluß des Motors) mit einer elastischen Kunststoffolie einhüllen.

In einem weiteren Ausführungsbeispiel sind eine Halteeinrichtung zum Fixieren der Schiebetür in der die Öffnung verschließenden Verschlußstellung, eine Eingreifeinrichtung, welche zwei miteinander in Eingriff bringbare Eingreifelemente mit korrespondierenden Gleitflächen zur Erzeugung einer Türbewegung im wesentlichen senkrecht zur Wandung aufweist, wobei ein Eingreifelement and der Tür und eines an der Wandung angeordnet ist und die Eingreifelemente in der Verschlußstellung außer Eingriff bringbar sind sowie eine mit der Eingreifeinrichtung verbundenen Steuereinrichtung zur Steuerung der Bewegung der Tür vorgesehen, welche in Abhängigkeit vom Fixieren der Schiebetür in der Halteeinrichtung die Eingreifelemente derart steuert, daß sie außer Eingriff treten. Mit einer solchen Anordnung kann, falls die Kraft des Antriebsmotors der Tür nicht ausreicht, die Tür vollends geschlossen werden, d.h. mit einer Zuziehhilfe versehen werden, die jedoch die Tür nicht ungewollt verriegelt. Die Halteeinrichtung kann dabei das am Kraftfahrzeug vorhandene Schloß sein.

Vorteilhafte Weiterbildungen der vorliegenden Erfindung werden in den abhängigen Ansprüchen angegeben.

Eine vorteilhafte Ausführungsform sieht vor, daß die Halteeinrichtung als an der Schiebetür oder der Wandung befestigter Zapfen, welcher in ein an der Wandung oder der Schiebetür befestigtes Schloß so einrastbar ist, daß im eingerasteten Zustand die Türbewegung in Öffnungrichtung gesperrt ist, ausgeführt ist. Diese Ausführungsform wird meist auch für handbetätigte Schiebetüren der Kfz-Erstausstatter gewählt. Besonders bei Großserienfahrzeugen, welche wahlweise mit handbetätigter oder elektrischer Schiebetür angeboten werden, ist es somit mgölich, somit einheitliche Schlösser zu verwenden. Dies bedeutet auch, daß bei der Nachrüstung keine neuen Schlösser erforderlich sind. Mit der Beibehaltung der Originalschlösser können somit Zusatzkosten, welche bei Nachrüstarbeiten druch behördliche Abnahme erfolgen müßten, entfallen.

Eine weitere vorteilhafte Ausführungsform sieht vor, daß das eine Eingreifelement lochförmig (vorzugsweise in der Wandung) ausgeführt ist und das andere Eingreifelement stangenförmig (vorzugsweise an der Tür) und mit angeschrägter Spitze ausgeführt ist, wobei mindestens eines der Eingreifelemente (vorzugsweise das stangenförmige) durch einen Elektromotor antreibbar ist. Es ist besonders vorteilhaft, daß das lochförmig ausgeführte Eingreifelement im Berührbereich mit dem stangenförmigen Eingreifelement eine drehbare ringförmige Walze aufweist, welche so angeordnet ist, daß sich die Walze bei einem Abgleiten des stangenförmigen Eingreifelementes auf der Mantelfläche der Walze dreht. Hiermit wird eine lange Lebensdauer der Gleitstücke dadurch erreicht, daß durch die Drehbarkeit der Reibwiderstand der Paarung extrem herabgesetzt wird und außerdem die Walze nicht nur in einem einzigen Punkt, sondern gleichmäßig um ihren Umfang herum abgenutzt wird.

Eine besonders vorteilhafte Variante der Erfindung sieht vor, daß die Steuereinrichtung einen eine Rastposition des Schlosses, vorzugsweise die erste Schnappstellung, in welcher die Verschlußstellung noch nicht völlig erreicht ist, singalisierenden Schloßsensor aufweist. Dieses Signal ist als Startsignal für das Ausrücken des stangenförmigen Eingreifelementes und somit das im wesentlichen senkrechte Anziehen der Tür bzw. Hereinkippen der Tür in die Verschlußstellung zu verwenden.

Es ist weiterhin vorteilhaft, daß an mindestens einem der Eingreifelemente, vorzugsweise an dem stangenförmigen Eingreifelement, ein zu der Steuereinrichtung gehörender Eingreifsensor zur Positionserfassung des Eingreifelementes angebracht ist. Ein solcher Positionssensor erfüllt mehrere Aufgaben. Zum einen ist es möglich, daß hiermit eine Selbstfindung des Eingreielementes erzielt wird, etwa um eine definierte Lage des Eingreifelementes, etwa nach einem Stromausfall, festzulegen (dies ist vorzugsweise die nicht ausgerückte Lage). Außerdem ist es vorteilhaft, die mittels Eingreifsensor ermittelte Position beim Ausfahren des stangenförmigen Eingreifelementes in das korrespondierende lochförmige Eingreifelement festzustellen. Bei einem vorgegebenen Ausrückzustand des an der Spitze keilförmigen Stangenelementes in das andere Eingreifelement hinein kann mit Sicherheit davon ausgegangen werden, daß sich die Tür in der Verschlußstellung befindet (diese wird von der Halteeinrichtung gehalten) und hiernach das stangenförmige Element wieder in die nicht ausgerückte Lage zurückgezogen werden, so daß eine Notöffnung leicht ermöglicht ist.

Eine besonders vorteilhafte Ausführungsform sieht vor, daß die Schiebetür ein mit dem Schloß verbindbares Schloßgestänge zur Entrastung von Zapfen und Schloß der Halteeinrichtung aufweist. Ein solches Schloßgestänge, welches das Schloß mit dem Türgriff zum Öffnen der Tür verbindet ist bereits in der Regel vom Kfz-Erstausrüster vorgegeben. Es ist hierbei sehr vorteilhaft, daß das Schloßgestänge über eine in eine Richtung wirkende Mitnehmerverbindung mit dem stangenförmigen Eingreifelement verbunden ist. Auf diese Weise kann sichergestellt werden, daß nur beim Ausrücken des stangenförmigen Eingreifelementes in eine bestimmte Richtung das Schloßgestänge betätigt und somit das Schloß entrastet wird.

Weitere vorteilhafte Weiterbildungen werden in den übrigen abhängigen Ansprüchen angegeben. Die vorliegende Erfindung wird nun anhand mehrerer Figuren erläutert. Es zeigen:
- Fig. 1: eine Seitenansicht auf ein Fahrzeug mit einer Schiebetür,
- Fig. 2: einen Schnitt durch die Schiebetür aus Fig. 1 nach A-A,
- Fig. 3a: eine Detailansicht von Teilen des Linearantriebs sowie des Läufers,
- Fig. 3b: eine Unteransicht von Teilen des Linearantriebs sowie des Läufers,
- Fig. 4: eine erfindungsgemäße Laufschiene mit angekleber Zahnstange mit eingesetztem Läufer,
- Fig. 5: eine weitere Ausführungsform einer erfindungsgemäßen Laufschiene mit eingeprägtem Zahnstangenprofil sowie einer Schmutzabdekkung.
- Fig. 6: eine Innenansicht der Schiebetür, insbesondere von Eingreifeinrichtung und Halteeinrichtung,
- Fig. 7: eine Detailzeichnung der Innenansicht nach Fig. 2 mit zusätzlicher Darstellung von Komponenten der Linearantriebsvorrichtung,
- Fig. 8a-8d: Einzelansichten der Haltevorrichtung und Eingreifeinrichtung,
- Fig. 9: eine schematische Darstellung von Halteeinrichtung und Eingreifeinrichtung im Einbauzustand.

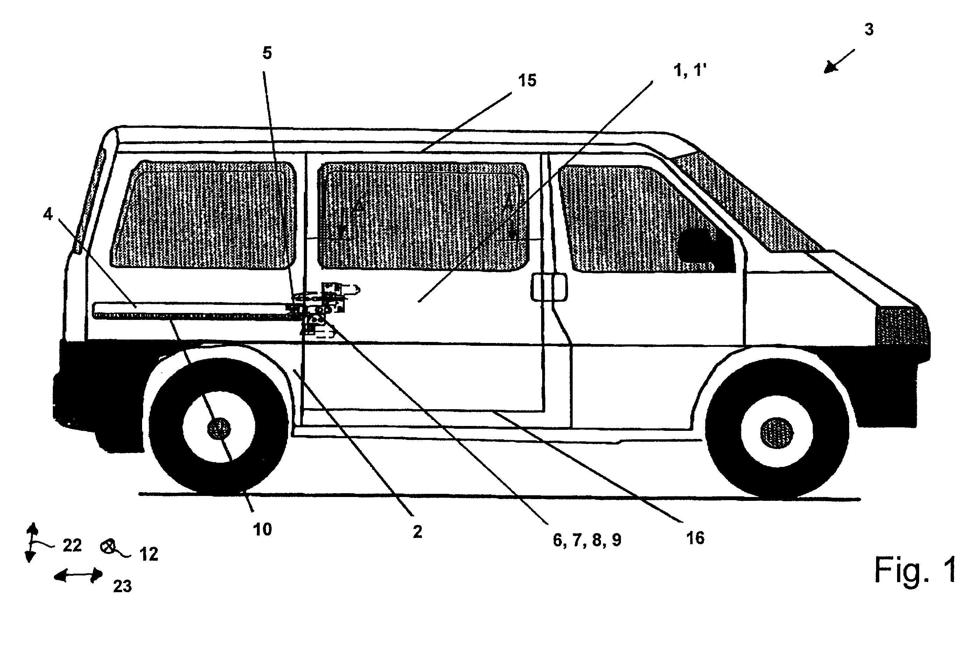

Figur 1 zeigt ein Fahrzeug 3, welches an einer Fahrzeugseite eine Schiebetür 1 aufweist. Die Schiebetür 1 verschließt eine gleichgroße Öffnung 1' in der Wandung 2 einer Seite des Kraftfahrzeuges. Im vorliegenden Falle ist die rechte Fahrzeugseite dargestellt, das Fahrzeug kann auf der linken Fahrzeugseite jedoch auch über eine (bis auf spiegelbildliche Modifikationen) identische Schiebetür verfügen. Die Schiebetür 1 ist im wesentlichen parallel zur Wandung 2 in Richtung 23 parallel zur Längsachse des Fahrzeugs 3 verfahrbar. Hierzu sind an der Oberkante und der Unterkante der Schiebetür nicht näher dargestellte Längsführungen 15 bzw. 16 vorgesehen. Zusätzlich wird die Schiebetür durch einen an der Schiebetür gelenktig befestigten Läufer 5 geführt, welcher in einer Laufschiene 4 abläuft. Die Führung erfolgt so, daß die Schiebetür durch den Läufer 5 in senkrechter Richtung 22 gestützt und in Richtung 12 senkrecht zur Schiebetür bzw. Wandung stabilisert wird. Die Tür wird mittels eines Linearantriebs der eine Zahnstange 10 und einen Elektromotor 6 mit nachgeschaltetem Zahnradgetriebe 7, 8, 9 aufweist, verschoben, auf welchen im folgenden detailliert eingegangen wird.

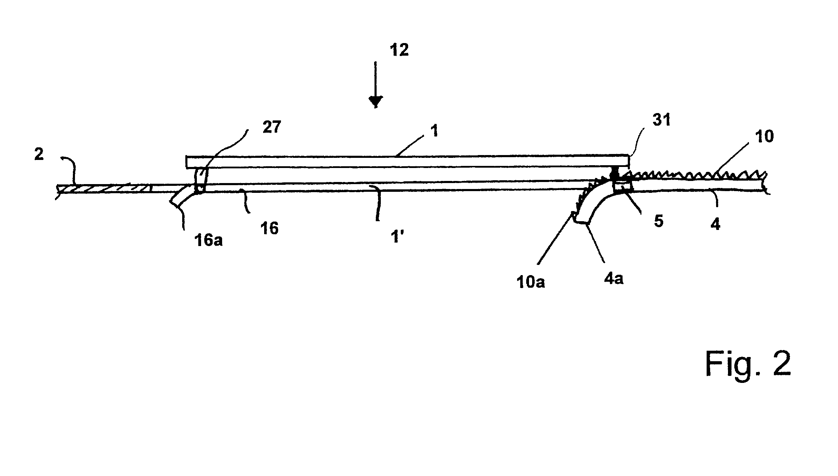

Figur 2 zeigt einen Schnitt A-A der Schiebetür 1 aus Fig. 1, wobei die Elemente des Linearantriebes 6, 7, 8, 9, 10 aus Vereinfachungsgründen nicht dargestellt sind. Es ist gezeigt, daß die Schiebetür 1 einen Halter 27 aufweist, welcher in eine korrespondierende Führungsschiene 16 der Fahrzeugwandung 2 eingreift und durch diese in Hochrichtung 22 gestützt und in Seitenrichtung 12 stabilisiert wird. Außerdem ist die Führungsschiene 16 in ihrem Endbereich 16a gekrümmt, so daß die Schiebetür 1, wenn sie sich dem Deckungszustand zur Öffnung 1' annähert, in Richtung 12 zur Wandung hin geführt wird. Ein entsprechendes Heranführen an die Wandung 2 wird auch durch die gekrümmte Form der Laufschiene 4 erreicht. Mit der Laufschiene 4 ist eine Zahnstange 10 verbunden, die in ihrer Form der Laufschiene 4 entspricht. In der Laufschiene 4 ist der Läufer 5 geführt, der gelenkig mit der Schiebetür fest verbunden ist. Die Laufschiene 4 und die Zahnstange 10 reichen an ihren Enden 4a bzw. 10a an die Öffnung 1' heran. An diesem Ende sind die Laufschiene 4 sowie die Zahnstange 10 in Eintrittsrichtung 12 zur Öffnung 1' gekrümmt. Nähert sich die Schiebetür 1 dem Deckungszustand mit der Öffnung 1', so wird durch den Läufer 5, welcher in der Laufschiene 4 geführt ist, die Schiebetür 1 zu der Wandung 2 hin bewegt, da der Läufer 5 mit der Schiebetür 1 (gelenkig) verbunden ist.

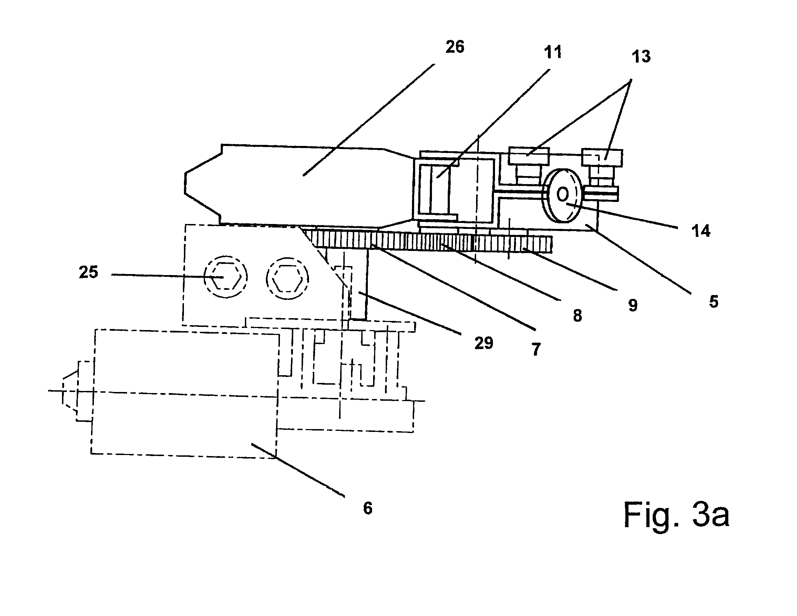

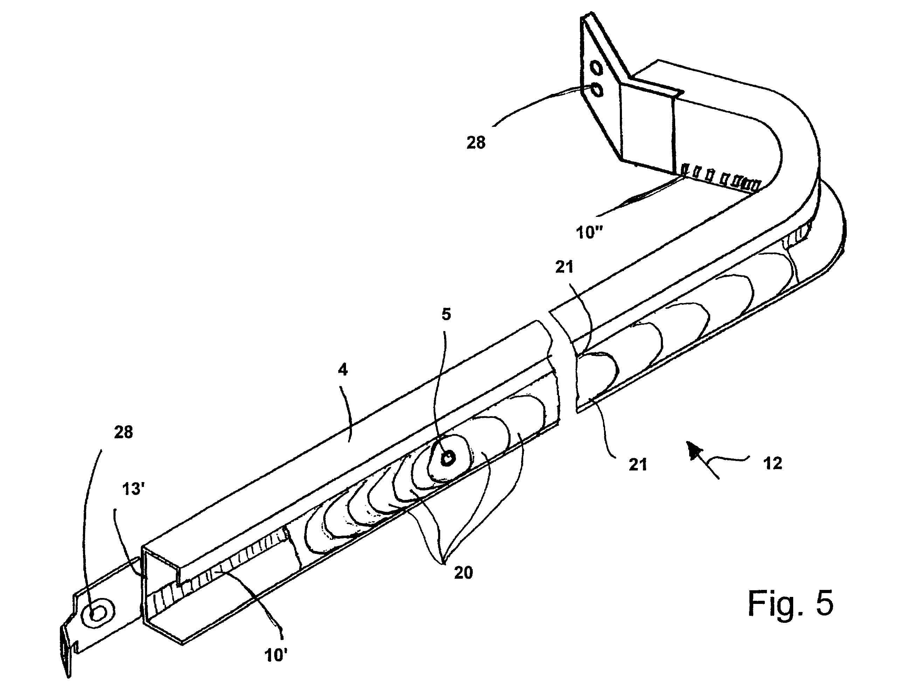

Figur 3a zeigt eine genaue Detailansicht des Läufers 5 sowie der antreibenden Teile des Linearantriebs. Ein antreibender Elektromotor 6, welcher mittels Schrauben 25 an die Schiebetür fest angebracht ist, ist hierbei gestrichelt dargestellt. Der Elektromotor 6 treibt eine Welle 29 an, auf der ein ein Ritzel 7 bildendes Zahnrad drehfest angebracht ist. Die Welle 29 ist in einem Trägerteil 26, welches ebenfalls fest an der Schiebetür angebracht ist, aufgenommen. Hierzu greift ein Zapfen der Welle 29 in eine korrespondierende Öffnung des Trägerteils 26 ein. Das Ritzel 7 treibt ein weiteres Zahnrad 8 an, welches auf der Achse eines Gelenks 11 zwischen der Schiebetür (dem Trägerteil 26) und dem Läufer 5 drehbar angeordnet ist. Das Gelenk 11 ist als Bolzenverbindung ausgeführt. Im Bereich des Gelenks 11 weist das Trägerteil 26 ein "C"-förmiges Anschlußteil auf, die beiden Schenkel des "C" weisen Bohrungen zur Aufnahme des Bolzens auf. Der sich anschließende Läufer 5 weist im Anschlußbereich ein Anschlußteil in Form eines spiegelverkehrten "C" auf, dessen Schenkel ebenfalls Bohrungen aufweisen. Die Schenkel des spiegelverkehrten "C" umfassen die Schenkel des "C" des Trägerteils 26 und sind gemeinsam von einem Bolzen, der sich in senkrechter Richtung erstreckt, druchsteckt. Hierdurch wird gewährleistet, daß der Läufer Kräfte in senkrechter Richtung 22 übertragen und somit die Schiebetür 1 durch den Läufer 5 gestützt werden kann. Die Bolzenverbindung 11 erfüllt somit zwei Aufgaben: Zum einen stellt sie die gelenkige, stützende Verbindung zwischen Trägerteil 26 und Läufer 5 dar, zum anderen ist sie die Drehachse für das Zahnrad 8. Das Zahnrad 8 treibt wiederum ein Zahnrad 9 an, welches in die Zahnstange 10 bzw. ein Zahnstangenprofil 10' (siehe Fig. 5) eingreift. Das Zahnrad ist in dem Grundkörper des Läufers 5 drehbar gelagert (z.B. wird ein seitlich an dem Zahnrad 9 herausstehender Gewindezapfen in eine korrespondierende Bohrung des Grundkörpers des Läufers 5 gesteckt und axial gesichert).

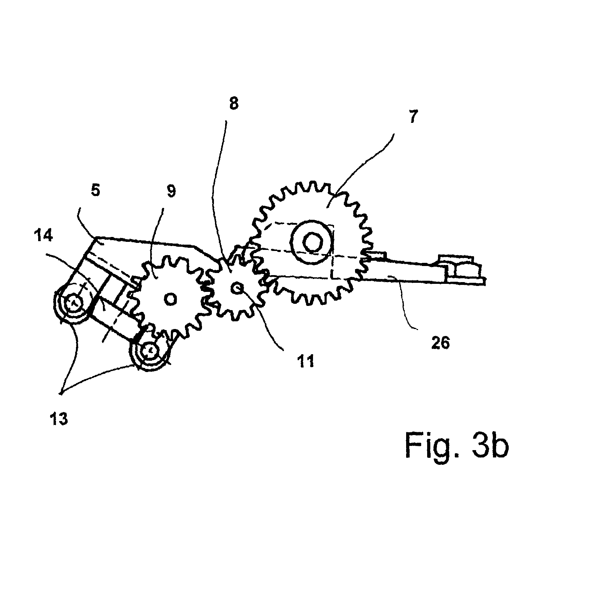

Figur 3b zeigt eine Unteransicht der nicthgestrichtelten Elemente aus Fig. 3a. Hierin sind die miteinander in Eingriff befindlichen Zahnräder 7, 8 und 9 zu sehen. Der Läuferwagen 5 weist seitliche Führungsrollen 13 sowie eine Abstützrolle in senkrechter Richtung 14 auf. Läufer 5 und Trägerteil 26 sind durch das Gelenk 11 miteinander verbunden. Das Zahnrad 7 weist z.B. eine Zähnezahl von 28, das Zahnrad 8 z.B. eine Zähnezahl 14 und das Zahnrad 9 z.B. eine Zähnezahl von 17 auf. Diese Werte können jedoch je nach Drehzahl bzw. Drehmoment des Elektromotors 6 variieren.

Bei einem Drehen des Läufers 5 um das Gelenk 11, wie es z.B. bei dem Durchfahren des gekürmmten Endbereichs 10a bzw. 4a von Zahnstange bzw. Laufschiene vorkommt, könnte es bei großen Drehwinkeln theoretisch zu einem Berühren der Zahnräder 7 und 9 kommen. Um dies von vornherein zu verhindern und damit auch die Verwendung beliebiger Zahnradkombinationen zu ermöglichen, ist es auch möglich, die Zahnräder 7 und 9 bezüglich der Achse des Zahnrads 8 (d.h. der Gelenkachse 11) seitlich (vorzugsweise um die Breite des breiteren Zahnrades) zu versetzen. Hierdurch wird eine breitere Ausführung des Zahnrades 8 nötig. Mit dieser Anordnung sind dann jedoch praktisch beliebige Drehwinkel zwischen Läufer 5 und Trägerteil 26 möglich.

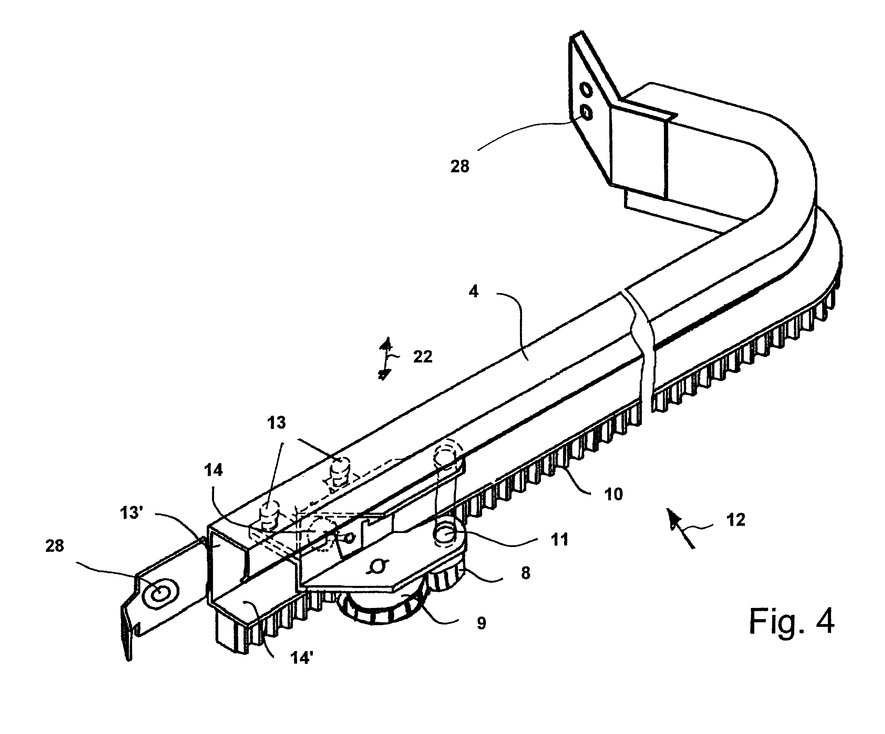

Der Läufer 5 weist die zwei Führungsrollen 13 auf, welche zur seitlichen Stabilisierung der Schiebetür an Seitenflächen 13' (siehe Fig. 4) der Laufschiene 4 geführt werden. Die Abstützrolle 14 stützt das Gewicht der Schiebetür in Richtung 22 (also in einer Richtung senkrecht zur Verschieberichtung der Schiebetür) ab. Hierzu läuft die Rolle 14 im Einbauzustand auf einer Grundfläche 14' (siehe Fig. 4) der Laufschiene 4.

Figur 4 zeigt eine erfindungsgemäße Laufschiene 4. Die Laufschiene 4 ist als einfach zu fertigendes Stahlblechteil ausgeführt (Biegen, Tiefziehen etc. sind als kostengünstige Umformprozesse möglich). An die Unterseite der Grundfläche 14' ist eine Zahnstange 10 angeformt, welche sich über die gesamte Länge der Laufschiene, also auch über den gekrümmten Bereich im Bereich des Endes 4a der Laufschiene (siehe Fig. 2c) erstreckt. Bei anderen Ausführungen ist es selbstverständlich auch möglich, die Zahnstange anzuschweißen, anzuschrauben, anzukleben etc.

Figur 5 zeigt eine weitere Ausführungsform einer erfindungsgemäßen Laufschiene 4 mit Zahnstange. Hierin ist das Zahnstangenprofil 10' über die gesamte Länge der Laufschiene 4 in eine Seitenfläche 13' der Laufschiene 4 eingeprägt (also auch im gekrümmten Bereich, siehe Rückseite des Zahnstangenprofils 10'').

Die Laufschiene 4 wird (dies gilt auch für Fig. 4) mittels nicht dargestellten Schrauben, welche durch Bohrungen 28 gesteckt werden, mit der Wandung 2 des Fahrzeugs 3 fest verschraubt oder ist anderweitig mit ihm verbunden. Vorzugsweise ist die Laufschiene entsprechend Fig. 1 in einer Nut im mittleren Bereich der Wandung hinter der Türöffnung aufgenommen. Es ist auch denkbar, daß sie an anderer Stelle des Abstützbereiches der Tür angebracht ist.

Figur 5 zeigt außerdem eine Vorrichtung zur Minimierung des Eindringens von Verschmutzungen im Bereich der Zahnstange bzw. des eingeprägten Zahnstangenprofils 10'. Die im Querschnitt der Laufschiene einzig offene Seitenfläche weist an ihrer Oberkante sowie ihrer Unterkante Längsführungen 21 auf, in welchen in der Längsführung gleitende abschottende Lamellen 20 geführt sind. Diese Lamellen erstrecken sich über die gesamte Länge der Laufschiene 4. Eine Lamelle weist eine Öffnung auf, durch welche die Verbindung zwischen Läuferwagen 5 und dem Trägerteil 26 erfolgt. Diese Lamelle ist fest mit dem Läufer 5 verbunden. Bewegt sich der Läufer 5 in Fig. 5 nach links, so verringert sich der Abstand zwischen den einzelnen Lamellen 20, welche sich auf der linken Seite des Läufers befinden, in entsprechender Weise vergrößert sich der Abstand zwischen den Lamellen 20 auf der rechten Seite des Läufers 5.

Es ist jedoch auch möglich, Teile des Linearantriebs (z.B. die besonders empfindlichen Zahnräder) vor dem Eindringen von Verschmutzungen zu schützen. Hierzu werden dies von einer elastischen Kapseldichtung, z.B. einem Gummibalg, umgeben.

Das Öffnen und Schließen der Schiebetür 1 erfolgt durch eine zu der Schiebetür gehörende, nicht dargestellt Steuereinrichtung. Die Schaltbefehle zum Öffnen und Schließen der Tür sind über elektrische Schalter auslösbar, welche an der Schiebetür selbst oder im Bereich der Bedienkonsole des Fahrers des Fahrzeugs 3 untergebracht sind. Die Schiebetür weist außerdem eine Einklemmsicherung auf, welche den Elektromotor 6 abschaltet oder seine Drehrichtung umkehrt, wenn die Schiebetür nicht in einer vorgebenen Zeit eine vorgegebene Endlage (z.B. die völlig geöffnete oder die völlig geschlossene Lage, in welcher die Schiebetür 1 die Öffnung 1' verdeckt, erreicht. Eine weitere Einklemmsicherung kann dadurch erreicht werden, daß innerhalb eines zwischen zwei Endlagenschaltern (diese schalten jeweils wenn die Tür völlig geöffnet oder völlig geschlossen ist) liegenden Verfahrweges eine der Verschiebebewegung der Schiebetür entgegengesetzte Kraft auf die Schiebetür wirkt, welche höher ist als eine vorgegebene Referenzkraft. Die Einstellung dieser Referenzkraft kann je nach den gesetzlichen Erfordernissen erfolgen.

Abhängig von den Ausführungsformen der Fahrzeuge kann es sein, daß eine relativ hohe Kraft des Linearantriebs nötig ist, um die Schiebetür 1 im Bereich ihrer Hinterkante 31 mit der Wandung 2 in Deckung zu bringen. Zur Unterstützng der Schiebetürbewegung in Richtung 12 im Bereich der Krümmung von Zahnstange und Führungsschiene dient eine als Zuziehhilfe wirkende Eingreifeinrichtung, welche im folgenden näher beschrieben wird.

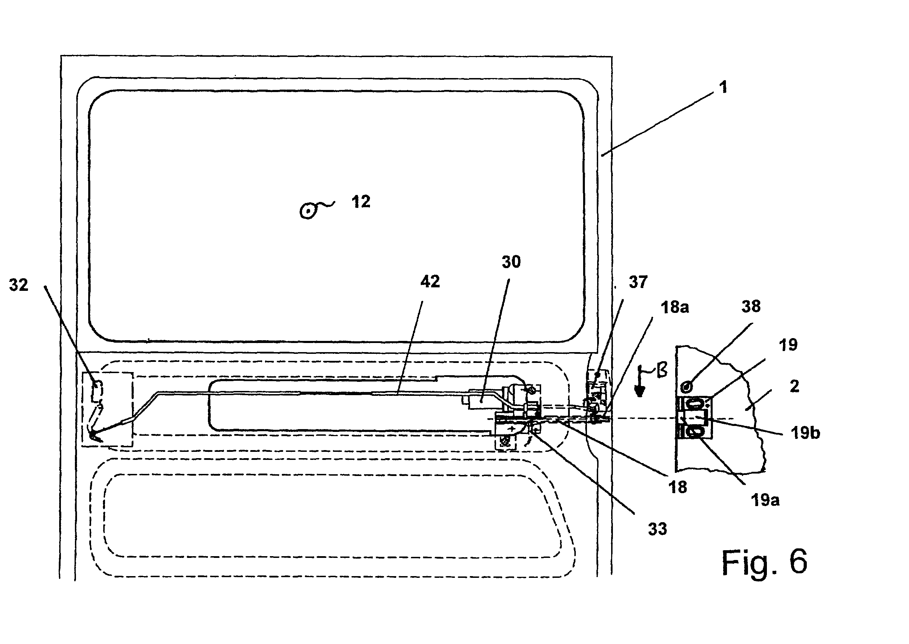

Figur 6 zeigt die Ansicht einer Schiebetür 1 aus dem Inneren des Fahrzeuges 3. In Figur 2 liegt der Schwerpunkt auf der Darstellung einer Halteeinrichtung zum Festlegen der Tür und der Eingreifeinrichtung. Zu der Halteeinrichtung gehört ein an der Innenseite der Tür 1 befestigtes Schloß 37. An der Wandung 2 ist ein Zapfen 38 befestigt, welcher partiell formschlüssig zu dem Schloß 37 ausgeführt ist. Bei Annäherung der Schiebetür 1 zu der Wandung bzw. dem Zapfen 38 hin, rastet der Zapfen 38 in dem Schloß 37 ein. Bei dieser ersten Rastposition verbleibt noch ein geringer Spalt zwischen Wandung 2 und Tür 1, die Verschlußstellung ist noch nicht völlig erreicht. Bereits in dieser ersten Rastposition ist es nicht mehr möglich, ohne Entrastung des Schlosses die Tür zu öffnen. In der kompletten Verschlußstellung, d.h. wenn die Schiebetür 1 an der Außenseite des Fahrzeugs 3 (d.h. der Wandung 2) bündig anliegt, befindet sich der Zapfen 38 in einer zweiten Rastposition des Schlosses 37.

Ein Schloßgestänge 42 ist einerseits mit dem Schloß 37 und andererseits mit einem an der Fahrzeugaußenseite befindlichen Handgriff 32 verbunden. Bei Betätigung des Handgriffs bzw. bei einem Zug an dem Schloßgestänge 42 erfolgt eine Entrastung des Zapfens 38 im Schloß 37. Neben dem Schloßgestänge und dem Handgriff weist die Halteeinrichtung außerdem eine Verriegelungsvorrichtung zur Sperrung des Schloßgestänges 42 auf. Hiermit ist es möglich, das Schloß gegen ein Entrasten, sei es durch Betätigung des Handgriffs 32 oder elektrisch, zu schützen. Die Halteeinrichtung kann praktisch komplett von Serienfahrzeugen mit handbetätigter Schiebetür übernommen werden. Dies gilt für das Schloß 37, den Zapfen 38, das Schloßgestänge 42, den Handgriff 32 sowie die Verriegelungsvorrichtung, etwa eine übliche zentralverriegelung. Selbstverständlich sind auch andere Ausführungen von Schloß und Zapfen denkbar, z.B. ist es möglich, den Zapfen an der Tür und das Schloß an der Wandung zu befestigen etc.

In Figur 6 ist außerdem eine Eingreifeinrichtung gezeigt, welche aus einer trüseitig befestigten linear verschiebbarer Stange 18 und einer an der Wandung befestigten Öffnung oder Aussparung 19 besteht. Die Spitze 18a an der Stange 18 ist auf der in Fig. 6 zu dem Eingreifelement 19 hin gerichteten Seite geschrägt. Hiermit wird erreicht, daß bei einem Schieben der Stange 18 in die Aussparung 19 hinein die Schiebetür gleichzeitig in Richtung 12 gezogen wird und somit die Antriebsvorrichtung der Schiebetür unterstützt wird.

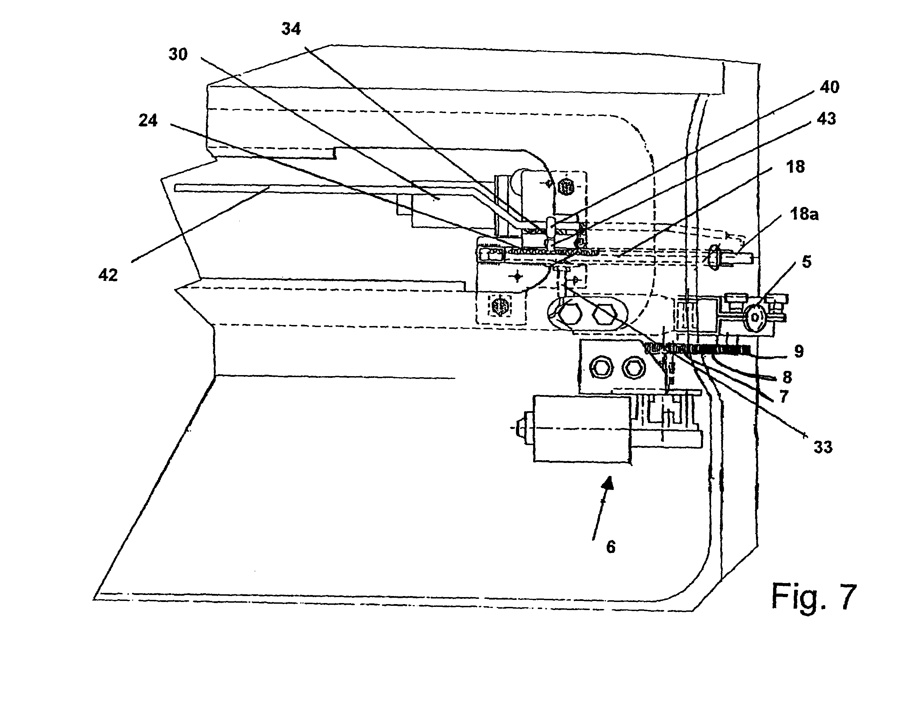

Figur 7 zeigt eine vergrößerte Ansicht entsprechend Fig. 6, wobei zusätzlich Teile des Linearantriebes zu sehen sind, die an der Tür befestigt sind. Die Schiebetür ist im wesentlichen hohl und beherbergt die Stange 18 zum größten Teil, wobei ein seitlichen Loch der Durchführung der Spitze 18a dient. Auf der Spitze entgegengesetzten Seite der Stange 18 ist ein Zahnstangenprofil 24 angebracht, in welcher ein von dem Elektromotor 30 angetriebenes Zahnrad 34 eingreift, um die Stange 18 bezüglich der Tür hin in waagerechte Richtung (bezogen auf Fig. 7) zu verschieben. Ein Eingreifsensor 33, welcher an der Tür befestigt ist, stellt den Verschiebe- bzw. Ausrückzustand der Stange 18 bezüglich der Tür fest. Auf den zu der Steuereinrichtung zum Öffnen und Schließen der Tür gehörenden Eingreifsensor zur Positionserfassung der Stange 18 wird weiter unten detailliert eingegangen.

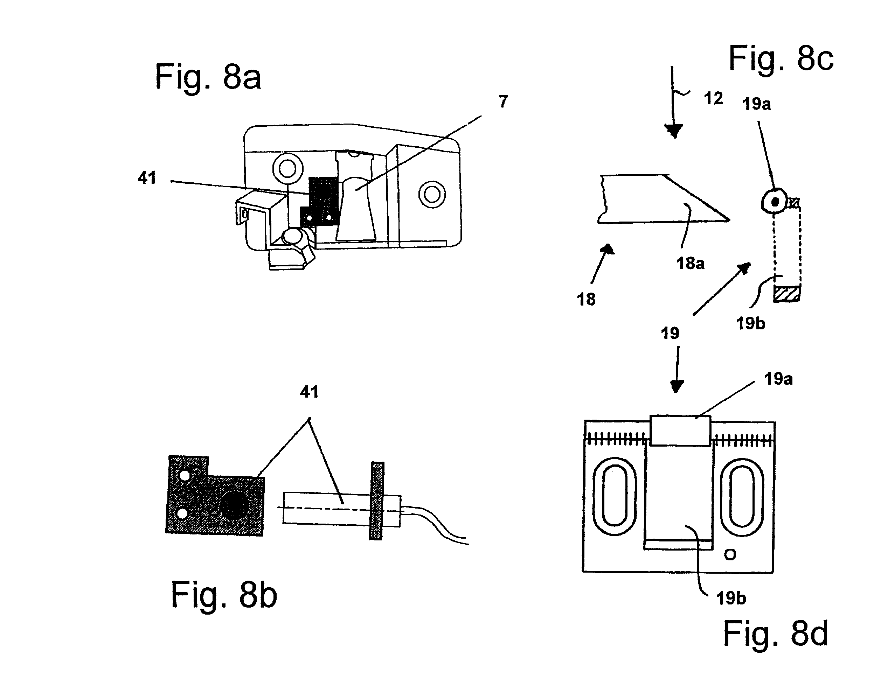

Figuren 8a bis 8d zeigen Einzelheiten von Halteeinrichtung und Eingreifeinrichtung.

Figur 8a zeigt ein in der Großserie hergestelltes Schloß 37, in welches ein zu der Steuereinrichtung gehörender Schloßsensor 41 eingebaut ist (der Schloßsensor 41 ist in einer Draufsicht und einer Seitenansicht auch in Fig. 8b einzeln zu sehen). Der Initiator bzw. Schloßsensor 41 ermittelt, ob der Zapfen 38 sich in der ersten Rastposition des Schlosses 37 befindet, d.h. in der Rastposition, in welcher die Schiebetür 1 noch nicht vollkommen in der Verschlußstellung, jedoch schon eingerastet ist.

Figur 8c zeigt eine Draufsicht (Ansicht B) von Teilen der Eingreifeinrichtung aus Fig. 6. For dem endgültigen Zuziehen der Schiebetür 1 (etwa wenn der Bolzen 38 in der ersten Rastposition des Schlosses 37 ist) befinden sich stangenförmiges Eingreifelement 18 und lochförmiges Eingreifelement 19 in der in Fig. 8c gezeigten Lage. Bei einem Ausrücken der Stange 18 auf das lochförmige Element 19 kommt die Schrägfläche der Spitze 18a mit der Mantelfläche einer ringförmigen Walze 19a in Berührung. Die Walze 19a ist bezüglich einer Achse, welche zu dem Eingreifelement 19 gehört, drehbar gelagert. Bei einer Bewegung der Stange 18 auf das Eingreifelement 19 zu, gleitet die Schrägfläche der Spitze 18a auf dem Mantel 19a ab, hierdurch wird die gesamte Schiebetür in Richtung 12, d.h. zu der Verschlußstellung hin, gezogen. Hierbei kann es zu einer Drehung der Walze 19a kommen.

Figur 8d zeigt eine Draufsicht des Eingreifelementes 19. Hierin ist eine Öffnung 19b, in welcher die Stange 18 geführt wird, zu sehen. Ebenfalls gezeigt ist die ringförmige Walze 19a. Beidseitig der Öffnung 19b sind Langlochbohrungen angebracht, welche zur einstellbaren Fixierung des Eingreifelementes 19 an der Wandung 2 dienen.

Die Darstellung der oben beschriebenen Eingreifelemente ist lediglich beispielhaft zu verstehen. Selbstverständlich ist auch eine kinematische Umkehr möglich (Öffnung an der Schiebetür, Stange an der Wandung). Es sind auch beliebige andere Eingreifelemente in der Erfindung inbegriffen, z.B. aneinander abgleitende Keilfläche, abrollende Zahnräder etc.

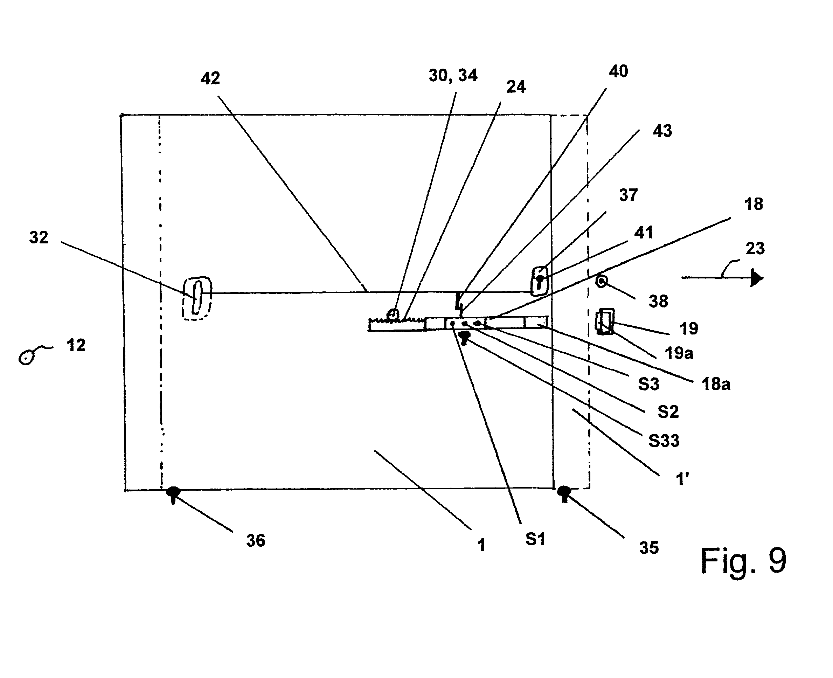

Anhand von Fig. 9 wird im folgenden das Zusammenwirken von Steuereinrichtung, Halteeinrichtung und Eingreifeinrichtung beschrieben. Fig. 9 zeigt zwei Türpositionssensoren 35 und 36 zur Bestimmung der Position der Schiebetür 1 bezügliche der Wandung 2. Die Türpositionssensoren gehören zur Steuereinrichtung. Der erste Türpositionssensor 35 ist zur Feststellung des annähernd geschlossenen Zustands der Schiebetür angeordnet. Der zweite Türpositionssensor 36 ist zur Feststellung des fast vollständig geöffneten Zustands der Schiebetür 1 bezüglich der Öffnung 1' angeordnet. Die Türpositionssensoren 35 und 36 können z.B. im Bereich der unteren oder oberen Führungsschiene (Bezugszeichen 15 oder 16) angebracht werden. Sämtliche oben beschriebenen Sensoren können auf verschiedene Weisen ausgeführt sein. Es ist möglich, induktive, kapazitive, meachnische oder lichttechnische Sensoren zu verwenden. Je nach Anwendungsgebiet können die Sensoren im vorliegenden Fall vorzugsweise als Reed-Kontakt, als Mikroschalter oder als Lichtschranken ausgeführt sein.

Die Kopplung zwischen Schloßgestänge 42 und Stange 18 ist aus der Fig. 9 zu erkennen. Diese Verbindung ist als in eine Richtung wirksame Mitnehmerverbindung ausgeführt. Bei Antrieb der Zahnstange 18 in Richtung 23 erfolgt kein Mitführen des Schloßgestänges 42. Bei einem Antrieb der Stange 18 entgegen der Richtung 23 wird die Schloßstange 42 mitgeführt, so daß das Schloß 37 entrastet wird. Diese Mitnehmerverbindung kann z.B. über eine an dem Zahnstangenprofil befindliche Augenschraube 43 und eine an dem Schloßgestänge befestigten Stellring 40 verwirklicht werden (siehe Fig. 7).

Im folgenden wird der Funktionsablauf der einzelnen Komponenten beim Öffnen und Schließen der Tür beschrieben.

Ausgegangen wird zunächst von einer vollkommen geöffneten Schiebetür 1, d.h. daß Schiebetür 1 und Öffnung 1' sich nicht bzw. nur geringfügig überlappen. Durch Betätigung eines Schalters z.B. auf der Innenseite der Tür oder am Armaturenbrett wird dem Linearantrieb ein Signal gegeben, so daß die Schiebetür in Richtung 23, im wesentlichen parallel zur Wandung, verfahren wird. Dieser Motorbetrieb geht weiter, bis die Schiebetür den Türpositionssensor 35 erreicht, zusätzlich kommt das Schloß 37 mit dem Bolzen 38 in Eingriff, so daß die erste Rastposition eingenommen wird, dies wird von dem Schloßsensor 41 detektiert. Der Eingreifsensor 33 befand sich bisher stets in der Mittelstellung, d.h. in der Stellung, in welcher der Eingreifsensor 33 auf Höhe einer Markierung S2 ist. Bei Auslösen des Türpositionssensors 35 und gleichzeitigem Auslösen des Schloßsensors 41 gibt die Steuereinrichtung dem Elektromotor 30 ein Signal, so daß über das Zahnrad 34 und das Zahnstangenprofil 24 die Stange 18 in Richtung 23 gefahren wird. Hierdurch wird auf die in Fig. 8c beschriebene Weise die Tür in Richtung 12 gekippt bzw. gezogen. Der Vortrieb durch den Elektromotor 30 erfolgt so lange, bis der Initiator 33 auf Höhe einer Markierung S1 der Stange 18 ist. Der Abstand zwischen S2 und S1 ist so bemessen bzw. die Schräge und der seitliche Versatz zwischen den Eingreifelementen 18 und 19 so gewählt, daß bei dem Eingreifsensor 33 in Höhe der Markierung Sl die Tür stets in vollkommener Verschlußstellung ist. Nun wird der Elektromotor 6 der Antriebsvorrichtung ausgestellt (in anderen Ausführungsformen ist es auch möglich, diesen bereits kurz vorher auszustellen) und der Elektromotor 30 erhält von der Steuereinrichtung ein Umkehrsignal, so daß die Stange bezüglich dem Eingreifsensor 33 wieder in die Mittelstellung S2 verfahren wird. Daraufhin wird der Elektromotor 30 abgestellt. Es ist nun möglich, z.B. mit der serienmäßigen Zentralverriegelung eines Fahrzeugs die geschlossene Schiebetür zu verriegeln.

Es ist festzuhalten, daß die Bewegungsrichtung der Stange 18 nach ihrem Eindringen in das Eingreifelement 19, um die Tür in die Verschlußstellung zu bringen, umgekehrt wrude und die Stange in die Mittelstellung zurückgekehrt ist, so daß in der Verschlußstellung die Stange 18 nicht mehr die Schiebetür 1 seitlich überragt bzw. in das Eingreifelement 19 eingreift, so daß die Schiebetür nicht mehr verkeilt ist.

Zum elektrischen Öffnen der Schiebetür 1 wird z.B. ein Signal durch einen im Handgriff 32 befindlichen Schalter oder einen im Armaturenbrett befindlichen Schalter des Fahrzeugs gegeben. Daraufhin gibt die mit diesen Schaltern verbundene Steuereinrichtung ein Signal an den Elektromotor 30, welcher sich dann so dreht, daß die Stange 18 aus der Deckungslage des Eingreifsensors 33 mit der Markierung S2 entgegen der Richtung 13 bewegt wird, bis die Markierung S3 erreicht ist. Durch die einseitige Mitnehmerverbindung 40', 42' erfolgt hierbei ein Ausrücken des Schloßgestänges 42, so daß das Schloß 37 völlig entrastet ist und den Bolzen 38 freigibt. Gleichzeitig gibt die Steuereinrichtung ein Signal an die mit ihr verbundene Linearantriebsvorrichtung, welche die Schiebetür 1 entgegen der Richtung 23 zur Offenstellung hin bewegt. Wird durch die Betätigungsschalter am Armaturenbrett oder am Handgriff kein anderslautendes Signal gegeben, verfährt die Schiebetür 1 bis in die vollkommen geöffnete Stellung, die Enabschaltung der Linearantriebsvorrichtung erfolgt durch den Türpositionssensor 36.

Wie in Fig. 9 gezeigt, hat der Eingreifsensor 33 drei Rastpositionen (S1, S2, S3) in der Stange 18. Es ist möglich, z.B. links von S1 und rechts von S3 einen Anschlag vorzusehen. So ist es z.B. möglich, daß bei Unterbrechung der Spannungsversorgung und späterer Wiederaufnahme der Spannungsversorgung eine "Selbstfindung" der Stange 18 mit Hilfe der Steuereinrichtung erfolgt. So ist es z.B. möglich, einSelbstfindungsprogramm vorzusehen, welches die Stange in eine vorgegebene Richtung bis zum Anschlag hin bewegt und nach Erreichen dieses Anschlages eine Richtungsumkehr des Elektromotors 30 einleitet bis zur zweiten Rastung. Ist dies erfüllt, befindet sich die Stange 18 in der Mittelstellung S2, welcher von der Stange üblicherweise eingehalten wird (bei Schließvorgängen wird kurzzeitig der Eingreifsensor 33 mit der Markierung S1 in Deckung gebracht, beim elektrischen Öffnen wird der Eingreifsensor 33 kurzzeitig mit der Markierung S3 zur Deckung gebracht, nach der Erreichung dieser Auslenkung leitet die Steuereinrichtung sofort ein Signal zur Richtungsumkehr der Stange 18 ein, so daß wieder die Mittelage S2 mit dem Eingreifsensor 33 zur Deckung gebracht wird).

Die Notöffnungseigenschaften der erfindungsgemäßen Schiebetür werden aus Fig. 9 leicht deutlich. Bei Ausfall der Spannungsversorgung ist es möglich, mit dem Handgriff 32 über das Schloßgestänge 42 das Schloß 37 zu entrasten, die Eingreifeinrichtung wird hierzu nicht gebraucht. Sie behindert auch nicht, da sich die Eingreifstange 18 in der Position S2 befindet. Bei der Notöffnung ist lediglich ein leicht erhöhter Karftaufwand zur Öffnung der Tür nonöten, um die Trägheit der Antriebsvorrichtung zu überwinden.

In einem weiteren Ausführungsbeispiel kann die Steuereinrichtung zusätzlich einen Steuermodus aufweisen, bei dem auch nach Verschließen der Tür die Eingreifeinrichtung in der Eingreifstellung verbleibt. Dies kann dann erwünscht sein, wenn das Kraftfahrzeug auch wertvolle Güter transportiert.

Die Eingreifeinrichtung kann in Zusammenhang mit der Steuereinrichtung auch als Zuziehhilfe bei Türen von Kraftfahrzeugen, die nicht als Schiebetüren ausgebildet sind, verwendet werden. Dabei arbeitet die Zuziehhilfe in gleicher Weise, wie oben in Zusammenhang mit den Fign. 6 bis 9 beschrieben wurde; lediglich die Kraftfahrzeugtür wird geschwenkt und nicht verschoben.

## Patentansprüche

1. Vorrichtung zum Öffnen und Verschließen einer Öffnung (1') in einer Wandung (2) mittels einer Schiebetür (1), insbesondere für Fahrzeuge (3), wobei die Schiebetür (1) durch eine Führungsvorrichtung (4, 5, 15, 16) im wesentlichen parallel zur Wandung (2) verschiebbar und durch einen Linearantrieb (6, 7, 8, 9, 10), welcher ein linear ausgebildetes Element (10) und ein damit in Eingriff stehendes antreibendes Element (9) aufweist, antreibbar angeordnet ist,
**dadurch gekennzeichnet,**
daß das linear ausgebildete Element (10) des Linearantriebs und eine zu der Führungsvorrichtung gehörende Laufschiene (4) einerseits an der Wandung (2) und das antreibende Element des Linearantriebs (9) sowie ein zu der Führungsvorrichtung gehörender, mit der Laufschiene (4) in Eingriff stehender Läufer (5) andererseits an der Schiebetür (1) befestigt sind, wobei der Läufer (5) über ein Gelenk (11) an der Schiebetür (1) befestigt ist.

2. Vorrichtung nach Anspruch 1, dadurch gekennzeichnet, daß die Laufschiene (4) und/oder das linear ausgebildete Element des Linearantriebs (10) an einem Ende an die Öffnung (1') heranreichen und an diesem Ende in Eintrittsrichtung (12) zur Öffnung (1') gekrümmt sind.

3. Vorrichtung nach Anspruch 1 oder Anspruch 2, dadurch gekennzeichnet, daß das linear ausgebildete Element des Linearantriebs und die Laufschiene an der Wandung vorzugsweise in einer Nut der Wandung hinter der Türöffnung angeordnet sind.

4. Vorrichtung nach Anspruch 1 oder 2, dadurch gekennzeichnet, daß der Linearantrieb einen Elektromotor (6) aufweist, der über ein Zahnradgetriebe (7, 8, 9) mit dem antreibenden Element des Linearantriebs verbunden ist.

5. Vorrichtung nach einem der vorhergehenden Ansprüche, dadurch gekennzeichnet, daß das linear ausgebildete Element des Linearantriebs als Zahnstange (10) und das antreibende Element des Linearantriebs als Zahnrad (9) ausgeführt sind.

6. Vorrichtung nach Anspruch 4 oder Anspruch 5, dadurch gekennzeichnet, daß ein Zahnrad (8) des Zahnradgetriebes (7, 8, 9) auf der Gelenkachse des Gelenks (11) zwischen Läufer (5) und Schiebetür (1) drehbar gelagert ist.

7. Vorrichtung nach Anspruch 6, dadurch gekennzeichnet, daß das auf der Gelenkachse gelagerte Zahnrad (8) mit zwei weiteren Zahnrädern (7, 9) in Eingriff ist und daß diese weiteren Zahnräder (7, 9) zur Vermeidung des Kontaktes untereinander bezüglich der Gelenkachse seitlich zueinander versetzt angeordnet sind.

8. Vorrichtung nach Anspruch 4, dadurch gekennzeichnet, daß ein Zahnrad (9) des Zahnradgetriebes (7, 8, 9) an dem Läufer (5) drehbar gelagert ist.

9. Vorrichtung nach Anspruch 5, dadurch gekennzeichnet, daß das Gelenk zwischen Läufer (5) und Schiebetür (1) als Bolzenverbindung (11) ausgeführt ist.

10. Vorrichtung nach Anspruch 5, dadurch gekennzeichnet, daß die Zahnstange (10) fest mit der vorzugsweise aus Metall bestehenden Laufschiene (4) verbunden ist.

11. Vorrichtung nach Anspruch 5, dadurch gekennzeichnet, daß das Zahnstangenprofil (10') in die vorzugsweise aus Metall bestehenden Laufschiene (4) eingepreßt ist.

12. Vorrichtung nach Anspruch 1, dadurch gekennzeichnet, daß zur Minimierung des Eindringens von Verschmutzungen in den Bereich des linear ausgebildeten Elements dieses durch mitlaufende Lamellen abgeschottet ist oder in den Bereich des Zahnradgetriebes eine elastische Kapseldichtung vorgesehen ist.

13. Vorrichtung nach einem der Ansprüche 1 bis 12, gekennzeichnet durch eine Halteeinrichtung (37, 38) zum Fixieren der Schiebetür (1) in der die Öffnung (1') verschließenden Verschlußstellung und eine Eingreifeinrichtung, welche zwei miteinander in Eingriff bringbare Eingreifelemente (18, 19) mit korrespondierenden Gleitflächen (18a, 19a) zur Erzeugung einer Türbewegung im wesentlichen senkrecht (12) zur Wandung aufweist, wobei ein Eingreifelement (18) an der Schiebetür (1) und das andere Eingreifelement (19) an der Wandung (2) angeordnet ist und die Eingreifelemente (18, 19) in der Verschlußstellung außer Eingriff bringbar sind sowie eine mit der Eingreifeinrichtung verbundenen Steuereinrichtung zur Steuerung der Bewegung der Tür, welche in Abhängigkeit vom Fixieren der Schiebetür in der Halteeinrichtung die Eingreifelemente derart steuert, daß sie außer Eingriff treten.

14. Vorrichtung nach Anspruch 13, dadurch gekennzeichnet, daß die Halteeinrichtung einen an der Schiebetür (1) oder der Wandung (2) befestigten Zapfen (38) sowie ein an der Wandung oder an der Schiebetür befestigtes Schloß (37) aufweist, wobei der Zapfen in das Schloß so einrastbar ist, daß in einer ersten Rastposition zwischen Schiebetür (1) und Wandung (2) ein Spalt verbleibt und in einer zweiten Rastposition die Schiebetür in Verschlußstellung ist.

15. Vorrichtung nach einem der Ansprüche 13 oder 14, dadurch gekennzeichnet, daß das eine Eingreifelement als Öffnung (19) ausgeführt ist und das andere Eingreifelement (18) stangenförmig und mit angeschrägter Spitze (18a) ausgeführt ist, wobei mindestens eines der Eingreifelemente durch einen Elektromotor antreibbar ist.

16. Vorrichtung nach Anspruch 15, dadurch gekennzeichnet, daß das als Öffnung (19) ausgeführte Eingreifelement im Berührbereich mit dem stangenförmigen Eingreifelement eine drehbare ringförmige Walze (19a) aufweist.

17. Vorrichtung nach einem der Ansprüche 13 bis 16, dadurch gekennzeichnet, daß an mindestens einem der Eingreifelemente (18, 19) ein zu der Steuereinrichtung gehörender Eingreifsensor (33) zur Positionserfassung des Eingreifelementes (18) angebracht ist.

18. Vorrichtung nach Anspruch 15 und Anspruch 17, dadurch gekennzeichnet, daß das stangenförmige Eingreifelement (18) türseitig angeordnet und über einen von dem Elektromotor (30) angetriebenen Linearantrieb verschiebbar ist, wobei die Verschiebung des stangenförmigen Eingreifelementes (18) bezüglich der Tür (1) von dem Eingreifsensor (33) erfaßbar ist.

19. Vorrichtung nach einem der Ansprüche 13 bis 18, dadurch gekennzeichnet, daß die Schiebetür (1) ein mit dem Schloß (37) verbindbares Schloßgestänge (42) zur Entrastung von Zapfen (38) und Schloß (37) aufweist.

20. Vorrichtung nach Anspruch 18 und 19, dadurch gekennzeichnet, daß das Schloßgestänge (42) über eine Mitnehmerverbindung (40, 43) mit dem stangenförmigen Eingreifelement (18) verbunden ist.

21. Vorrichtung zum Zuziehen einer eine Öffnung in einer Wandung verschließenden Tür eines Kraftfahrzeuges, die eine Halteeinrichtung zum Fixieren und Verschließen der Tür aufweist, die einen an der Tür oder Wandung befestigten Zapfen sowie ein an der Wandung oder der Tür befestigtes Schloß umfaßt, wobei der Zapfen in einer ersten Stellung in das Schloß so einrastet, daß die Türbewegung in Öffnungrichtung gesperrt ist, aber ein Spalt zwischen Tür und Wandung verbleibt und in einer zweiten Stellung die Tür in der Verschlußstellung ist, dadurch gekennzeichnet, daß eine Eingreifeinrichtung vorgesehen ist, welche zwei miteinander in Eingriff bringbare Eingreifelemente (18, 19) mit korrespondierenden Gleitflächen (18a, 19a) zur Erzeugung einer Türbewegung im wesentlichen senkrecht zur Wandung aufweist, wobei ein Eingreifelement (18) an der Tür und das andere an der Wandung angeordnet ist und die Eingreifelemente (18, 19) in der Verschlußstellung außer Eingriff bringbar ist und daß die Eingreifeinrichtung mit einer Steuereinrichtung verbunden ist, die in Abhängigkeit von der zweiten Stellung der Tür die Eingreifelemente derart steuert, daß sie außer Eingriff treten.

22. Vorrichtung nach Anspruch 21, die entsprechend den Merkmalen nach einem der Ansprüche 15 bis 18 ausgebildet ist.
